# EUROPEAN PATENT APPLICATION

(11) **EP 4 597 097 A1**
(43) Date of publication of application: **06.08.2025**
(21) Application number: 24155300.7
(22) Date of filing: 01.02.2024
(51) Int. Cl.: G01N 30/30, G01N 30/72

(54) **DEVICE AND METHOD FOR TEMPERATURE REGULATION OF A SAMPLE FLUID**

(71) Applicant: ETH Zurich, 8092 Zurich (CH)
(72) Inventor: ZENOBI, Renato, 8049 Zürich (CH); KAESLIN, Jérôme, 5600 Lenzburg (CH); MARCHAND, Adrien, 8302 Kloten (CH); PRUSKA, Adam, 8600 Düdendorf (CH); HARRISON, Julian, 8046 Zürich (CH)

(57) **Abstract**

A temperature regulation device (1) for regulating an effective temperature profile of a sample fluid (5), preferably a sample fluid (5) destined for electrospray ionization, has a capillary (10) configured for guiding the sample fluid (5), an input block (20) in which an input portion (12) of the capillary (10) is received, an output block (30) in which an output portion (13) of the capillary (10) is received, and at least one intermediate block (401,402,403) in which at least one intermediate portion (141,142,143) of the capillary (10) is received. Each block comprises a temperature regulation unit, wherein each of the temperature regulation units is configured to individually regulate a temperature of the respective portion of the capillary (10) and thereby regulate the effective temperature profile of the sample fluid (5) along its flow path.

## Description

### TECHNICAL FIELD

The present invention relates to a temperature regulation device, a method for regulating an effective temperature profile of a sample fluid using the temperature regulation device, an electrospray ionization setup comprising the temperature regulation device, and an electrospray ionization method for generating an electrospray of a sample fluid using said electrospray ionization setup.

### PRIOR ART

Elucidating the structural and functional characteristics of biomolecules is a cornerstone of structural biology. A key part of this research field is to determine stability, thermodynamics, and binding properties for developing biotherapeutics and drugs. One technique that can be utilized to determine these parameters is electrospray ionization mass spectrometry (ESI-MS). ESI-MS can be used to analyze the thermal behavior of biomolecules by analyzing sample aliquots that have been subjected to a range of temperatures. A review of the prior art in the field of temperature-controlled (TC)-ESI-MS can be found in J.A. Harrison et al., "Temperature-Controlled Electrospray Ionization: Recent Progress and Applications", Chem. Eur. J. 2021, 27, 18015 (2021), DOI: 10.1002/chem.202102474. Typically, thermal MS profiling is done offline, i.e. the samples are first undergoing a heating and/or cooling treatment and are then analyzed independently using MS at a later stage. This approach requires significant amounts of samples and is time-consuming. There is thus a need to develop versatile temperature regulation devices that allow for online measurements, i.e. continuous measurements, which provide fast insights about the thermal behavior of an analyte in the sample.

### SUMMARY OF THE INVENTION

In a first aspect, it is an object of the present invention to provide customizable temperature regulation device which enables flexible control over an effective temperature profile of a sample fluid that propagates along a flow path.

This object is achieved by temperature regulation device according to claim 1. Further embodiments of the invention are laid down in the dependent claims.

A temperature regulation device for regulating an effective temperature profile of a sample fluid, preferably a sample fluid destined for electrospray ionization, is disclosed. The temperature regulation device comprises:
a capillary configured for guiding the sample fluid along a flow direction, the capillary defining a flow path for the sample fluid;
an input block in which an input portion of the capillary is received, the input block comprising an input temperature regulation unit acting on the input portion of the capillary,
an output block in which an output portion of the capillary is received, the output block comprising an output temperature regulation unit acting on an output portion of the capillary;
at least one intermediate block in which at least one intermediate portion of the capillary is received, the at least one intermediate block being arranged between the input block and the output block along the flow path, and each intermediate block comprising an intermediate temperature regulation unit acting on the respective intermediate portion of the capillary, and
a control system for controlling the input temperature regulation unit, the output temperature regulation unit and the at least one temperature regulation unit,
wherein each of the input temperature regulation unit, the output temperature regulation unit and the at least one intermediate temperature regulation unit is configured to individually regulate a temperature of the respective portion of the capillary and thereby regulate the effective temperature profile of the sample fluid along the flow path.

The input block, the output block and the intermediate block are preferably thermally insulated from each other via an insulator element, preferably via an insulator layer comprising or consisting of polyether ether ketone (PEEK) and/or polytetrafluoroethylene (PTFE).

Having at least three regulatable temperature regulation units which are configured to regulate a temperature of the respective portion of the capillary individually enables setting a variety of different temperature profiles along the flow path, which in turn enables a variety of different thermal experiments on the sample fluid, as will be described further below.

Having at least one intermediate block in addition to an input block and output block for instance allows for treating the sample fluid by heating or cooling within the intermediate block, while also being able to precisely control both an initial temperature of the sample fluid prior to the actual heating or cooling treatment, as well as an output temperature of the sample fluid exiting the output block for further analysis after the actual treatment. The heating or cooling treatment may be flexibly combined with optical irradiation and/or mixing with auxiliary substances and/or enzymatic digestion, as will be described below.

In particular, the sample fluid may be an aqueous solution and may comprise volatile salts and/or biological buffers containing proteins and/or nucleic acids and/or small molecules and/or metal ions and/or inorganic compounds and/or organic molecules, as well as complexes of such molecules.

It is also conceivable to provide a set of input blocks and/or output blocks and/or intermediate blocks of different lengths that may be combined at will to build a customized temperature regulation device depending on the type of experiment to be conducted.

The control system may comprise an input controller for setting the input temperature regulation unit to an input set temperature, an output controller for setting the output temperature regulation unit to an output set temperature, and at least one intermediate controller for setting the intermediate temperature regulation unit to an intermediate set temperature.

Alternatively, the control system may comprise a single common controller, preferably a programmable common controller, configured to set the respective set temperatures of all temperature regulation units to set a desired set temperature profile. The individual controllers or the single common controller may be operated manually or may be operated using remote programming.

The temperature regulation units may each comprise a Peltier element, each Peltier element having a heat sink side and a regulating side being opposite to the heat sink side. Preferably, each temperature regulation unit comprises a temperature sensor.

The temperature sensor may be connected to the respective individual controller or to the common controller, wherein the respective individual controllers or the common controller may comprise a feedback module, in particular a proportional-integrative (PI) or proportional-integrative-derivative (PID) module, to create a closed feedback loop and thereby maintain the temperatures at set values.

The temperature regulation device may comprise a heat sink element thermally connected to the heat sink sides of the Peltier elements. The heat sink element is preferably thermally conductive, in particular, having a thermal conductivity of at least 150 W/(m·K), preferably at least 300 W/(m. K). The heat sink element may be water-cooled, in particular, it may comprise a metal (e.g., copper) block with an integrated water-circuit. The heat sink element may comprise input/output fittings for connection to water tubes. A single heat sink element may in particular be used for all the Peltier elements. The heat sink element may comprise recesses configured to receive the Peltier elements, wherein each recess is manufactured such that it exhibits a flat receiving surface that is preferably in direct contact with the heat sink side of the respective Peltier elements, thereby eliminating the need for additional heat transfer layers between the Peltier element and the heat sink element.

In order to increase the available temperature range, it is conceivable for the temperature regulation units to comprise a stack of two or more Peltier elements.

Alternatively or additionally to the one or more Peltier elements, each temperature regulation unit may comprise a heating wire and/or a fan cooling system to regulate the temperature of the respective block.

Preferably, the output block comprises an end face with a recess, wherein the output portion of the capillary has a capillary tip defining an end of the flow path in flow direction, wherein the capillary tip protrudes into the recess, and wherein the capillary tip does not protrude beyond the end face of the output block. By keeping the capillary tip within the output block, i.e. such that the capillary tip does not protrude beyond the end face of the output block, temperature control of the capillary tip by the output temperature regulation unit is facilitated.

Preferably, the output temperature regulation unit comprises a Peltier element dimensioned and arranged such that it extends in parallel to the output capillary at least up to the capillary tip, preferably beyond the capillary tip, to enable temperature control of the air in the recess and thus the capillary tip protruding into the recess. Precise control over the temperature at the capillary tip may be particularly important when the fluid exiting the capillary tip is to be sprayed using electrospray ionization.

The input block may comprise a removable input capillary holder configured to receive the input portion of the capillary, and/or the at least one intermediate block may each comprise a removable intermediate capillary holder configured to receive the intermediate portion of the capillary, and/or the output block may comprise a removable output capillary holder configured to receive the output portion of the capillary. Preferably, each removable capillary holder comprises a holder base with a base groove and a holder cover with a cover groove, such that, when assembled, the base groove and the cover groove form a tunnel in which the respective portion of the capillary is received.

The holder base and the holder cover are preferably connected in a heat conducting manner when assembled, e.g. the holder base and the holder cover may be screwed or clamped together using thermally conductive screws or clamps, preferably such that there is no air gap between the holder base and the holder cover when assembled.

The capillary holders being removable from their respective block allows for an exchange of the capillary holders to fit different types of capillaries. In particular, the temperature regulation device may comprise a set of different capillary holders, wherein the tunnels formed by the base groove and the cover groove may have different diameters to accommodate capillaries of different outer diameters.

Preferably, the outer diameter of the capillary ranges from 100 µm to 2000 µm. The tunnels formed by the base groove and the cover groove may therefore have a diameter ranging from 100 µm to 2000 µm, wherein the diameter of the tunnels may be chosen according to the desired capillary and is preferably marginally larger than the diameter of the capillary to be able to comfortably insert the capillary into the grooves without damaging it and to account for potential expansion of the capillary with temperature changes, while providing a tight fit to enable optimum heat exchange between the capillary and the respective capillary holder.

The capillary may comprise or consist of a metal, for instance stainless steel and/or copper and/or aluminium and/or titanium and/or gold and/or silver and/or platinum and/or their respective composites. Alternatively, the capillary may comprise or consist of a glass material, for instance polyimide-coated and/or graphite-coated glass and/or borosilicate, and/or aluminosilicate and/or quartz.

The capillary may be straight, or may comprise angles and/or bends and/or may comprise a coiled portion.

Furthermore, each block may comprise a block base and a block cover, wherein the block base has a base recess configured to receive the holder base of the respective capillary holder, and/or wherein the block cover has a cover recess configured to receive the holder cover part of the respective capillary holder. The block base and the block cover are preferably connected to each other in a heat conducting manner when assembled, e.g. the block base and the block cover may be screwed or clamped together using thermally conductive screws or clamps, preferably such that there is no air gap between the block base and the block cover when assembled.

The block bases and/or block covers and/or the capillary holders preferably comprise or consist of a metal, in particular, copper.

The temperature regulation device may further comprise a rail, wherein the input block, the output block and the at least one intermediate block are mounted on the rail, preferably so as to be individually removable from the rail.

Providing a rail allows for an easy alignment of the blocks with respect to each other and allows blocks to be added to or removed from the temperature regulation device depending on the need. Preferably, the rail is parallel to the flow path, in particular if the flow path is straight. The blocks may be configured to be slidable along the rail.

In particular in case the temperature regulation device comprises exchangeable capillary holders and an exchangeable capillary, when the capillary is to be exchanged, the block bases may first be mounted on the rail and aligned to each other, the capillary holder bases may be placed into the respective block bases and the capillary may then subsequently be placed into the base grooves of the capillary holder bases.

Preferably, the temperature regulation systems and the rail are arranged on opposite sides of the respective blocks. In particular, each block cover may have a top surface on which the temperature regulation system is arranged. The Peltier elements may be arranged between the top surface of the respective block cover and the heat sink element. Each block base may have a bottom surface which is configured to be connected to the rail.

In some embodiments, the temperature regulation device may comprise:
a first intermediate block;
a second intermediate block arranged adjacently to the first intermediate block along the flow path, and
a third intermediate block arranged adjacently to the second intermediate block along the flow path,
wherein the first intermediate block, the second intermediate block and the third intermediate block preferably each comprise an intermediate temperature regulation unit.

A temperature regulation device with exactly three intermediate blocks may be preferable, since having three intermediate block enables the generation of a variety of different temperature profiles while still keeping the temperature regulation device relatively compact.

The temperature regulation device may further comprise an optical interaction unit configured to allow electromagnetic radiation to irradiate the sample fluid, the optical interaction unit being arranged within the input block or the output block or the at least one intermediate block.

The temperature regulation device may also comprise two of more optical interaction units arranged in the same or in different blocks.

The capillary may comprise an optical interaction portion which is part of the optical interaction unit. The optical interaction portion of the capillary may comprise an input coupling section at which input electromagnetic radiation may be coupled into the capillary to reach the sample. The optical interaction portion of the capillary may further comprise an output coupling section at which output electromagnetic radiation may be coupled out of the capillary. The optical interaction unit may further comprise one or more focussing lenses to focus the input and/or output electromagnetic radiation and/or one or more refraction elements and/or one or more diffraction elements and/or one or more mirrors to guide the electromagnetic radiation.

The input block or output block or intermediate block, in which the optical interaction unit is arranged, may have one or more windows or one or more optical fiber connections to enable the electromagnetic radiation stemming from a light source to enter and/or exit the optical interaction unit.

The input electromagnetic radiation may be incoherent radiation, e.g. stemming from a thermal light source or a discharge lamp, or coherent radiation, in particular a laser beam. The output electromagnetic radiation may correspond to a non-absorbed portion of the input electromagnetic radiation or may comprise fluorescence radiation. Accordingly, the temperature regulation device may be augmented by a light source configured to couple electromagnetic radiation into the input coupling section of the optical interaction portion of the capillary. The light source may comprise, e.g., an LED, an incandescent lamp, a discharge lamp, or a laser.

The output electromagnetic radiation may be analyzed using an optical detector, e.g. to gain spectroscopic information about the sample fluid. Accordingly, the temperature regulation device may be augmented by an optical detector configured to receive electromagnetic radiation that leaves the output coupling section of the optical interaction portion of the capillary. The light source and/or the optical detector may be arranged separately from the temperature regulation device or may be integrated into one of the blocks of the temperature regulation device to obtain a particularly compact setup.

The temperature regulation device may further comprise a mixing unit having a sample inlet for the sample fluid and an auxiliary inlet for an auxiliary substance, in particular, for an auxiliary fluid, the mixing unit being configured to enable mixing of the auxiliary substance with the sample fluid, the mixing unit being arranged within the input block or the output block or the at least one intermediate block.

The temperature regulation device may also comprise two of more mixing units arranged in the same or in different blocks.

The auxiliar substance may comprise ligands or binding partners, which may be dissolved or dispersed in a carrier fluid. The auxiliary substance may be used to induce enzymatic digestion, or may be used to perform different types of labelling processes, in particular covalent labelling. Examples of labelling processes are hydrogen-deuterium exchange (HDX), fast fluoroalkylation of proteins (FFAP) or fast photochemical oxidation (FPOP). The mixing unit may be a part of the capillary, i.e. the capillary may comprise a mixing section or mixing chamber, the auxiliary inlet being connected to the mixing section or mixing chamber to fill the auxiliary substance into the mixing section or mixing chamber of the capillary. The mixing section or mixing chamber may have a larger diameter than the portions of the capillary upstream and/or downstream of the mixing section or mixing section. The mixing section or mixing chamber may be connected to the portions of the capillary upstream and/or downstream of the mixing section or mixing section via standard fittings. An auxiliary fluid pump may be used to pump the auxiliary substance into the mixing unit.

The temperature regulation may further comprise an enzymatic reactor, which may have the form of a column reactor. The enzymatic reactor may contain one or more enzymes, in particular immobilized enzymes, for digesting components of the sample fluid. The enzymatic reactor may be arranged within the input block or the output block or the at least one intermediate block.

The temperature regulation device may also comprise two or more enzymatic reactors arranged in the same or in different blocks.

The enzymatic reactor may be pre-filled with the desired enzymes, i.e. the enzymatic reactor does not necessarily need to have an additional inlet for the enzymes, but may be an in-line component that can be connected to the desired portion of the capillary in the respective block using standard fittings, and which may in particular be exchangeable.

The temperature regulation device may further comprise a separation column for separating components of the sample fluid, the separation column being arranged within the input block or the output block or the at least one intermediate block.

The separation column may be formed in a portion of the capillary. In particular, the separation column may be a liquid separation system such as a liquid chromatography (LC) column and/or a microfluidic system, which may be connected in-line using standard fittings.

In a second aspect, it is an object of the present invention to provide a method for regulating an effective temperature profile of a sample fluid in a flexible manner.

This object is achieved by a method according to claim 7.

A method for regulating an effective temperature profile of a sample fluid, preferably a sample fluid destined for electrospray ionization, using a temperature regulation device according to the first aspect of the present invention is disclosed. The method comprises:
providing a sample fluid;
establishing a flow of the sample fluid through the capillary;
setting the input temperature regulation unit of the input block to an input set temperature;
setting the intermediate temperature regulation unit of the at least one intermediate block to an intermediate set temperature;
setting the output temperature regulation unit of the output block to an output set temperature.

In practice, there will usually be a discrepancy, e.g. hysteresis, between the effective temperature profile of the sample fluid, in the following also termed "the effective fluid temperature profile", in the capillary and the target set temperature profile set with the temperature regulation units, since the sample fluid may not instantly heat up or cool down. The discrepancy may depend on the flow rate of the fluid through the capillary, wherein the discrepancy typically increases with an increase in flow rate.

In so-called temperature jump experiments, it may be desirable to increase or decrease the temperature of the fluid in the capillary as quickly as possible to generate a step-like temperature profile along the flow path.

In order to obtain an effective fluid temperature profile along the flow path which approaches an ideal step-like function, the intermediate set temperature may be used as an overshoot or undershoot to help "dragging" the effective fluid temperature more quickly to the desired output set temperature.

Thus, the intermediate set temperature may be higher or lower than the input set temperature, and the output set temperature may be between the intermediate set temperature and the input set temperature.

Two types of so-called "temperature-shock" experiments may be conducted: so-called "heat-shock experiments" and so-called "cold-shock experiments".

In "heat-shock experiments", the sample fluid is supposed to be heated from the input temperature to a desired target temperature as quickly as possible, and then subsequently cooled down again to the output temperature as quickly as possible, i.e. following an essentially rectangular target temperature profile along the flow path.

The "heat-shock method" may be used to study the reversibility of heat-induced changes in biomolecules. An advantage is that the solution may be eventually sprayed at a low temperature, in particular room temperature, without any changes in electrospray ionization efficiency.

In particular, protein fragmentation induced by the "heat-shock method" may be used to determine protein structure and identify residues involved in the active site.

Thus, in such a case, the intermediate set temperature may be higher or lower than the input set temperature, and the output set temperature may be equal to the input set temperature.

In a case where the temperature regulation device comprises the three intermediate blocks, the intermediate temperature regulation unit of the first intermediate block may be used to overshoot said target temperature, while the temperature of the intermediate temperature regulation unit of the second intermediate block may be set to the actually desired target temperature in order to reduce the discrepancy between the target temperature profile, i.e. the set temperature profile, and the effective fluid temperature profile of the sample fluid that may occur in practice. The temperature regulation unit of the third intermediate block may be used to undershoot the output temperature. Such overshooting and undershooting may help to adiabatically approach an ideal rectangular temperature profile for the sample fluid.

In particular, the intermediate temperature regulation unit of the first intermediate block may be set to a first intermediate set temperature being higher or lower than the input set temperature;
the intermediate temperature regulation unit of the second intermediate block may be set to a second intermediate set temperature being between the first intermediate set temperature and the output set temperature, and
the third intermediate temperature regulation unit of the third intermediate block may be set to a third intermediate set temperature,
wherein the third intermediate set temperature is lower than the output set temperature in case the first intermediate set temperature is higher than the input set temperature, or
wherein the third intermediate set temperature is higher than the output set temperature in case the first intermediate set temperature is lower than the input set temperature.

If the temperature regulation device further comprises an optical interaction unit configured to allow electromagnetic radiation to irradiate the sample fluid, the optical interaction unit being arranged within the input block or the output block or the at least one intermediate block, the method may further comprise:
providing electromagnetic radiation;
irradiating the sample fluid in the optical interaction unit with the electromagnetic radiation, and
optionally, detecting the electromagnetic radiation after interaction with the sample fluid.

If the temperature regulation device further comprises a mixing unit having a sample inlet for the sample fluid and an auxiliary inlet for an auxiliary substance to be mixed with the sample fluid, the mixing unit being arranged within the input block or the output block or the at least one intermediate block, the method may further comprise:
providing an auxiliary substance, and
mixing the auxiliary substance with the sample fluid in the mixing unit.

If temperature regulation device further comprises an enzymatic reactor that contains enzymes for digesting components of the sample fluid, the enzymatic reactor being arranged within the input block or the output block or the at least one intermediate block, the method may further comprise:
inducing a digestion of components of the sample fluid by establishing a flow of the fluid through the enzymatic reactor.

If the temperature regulation device further comprises a separation column for separating components of the sample fluid, the separation column being arranged within the input block or the output block or the at least one intermediate block, the method may further comprise:
inducing a separation of components of the sample fluid by establishing a flow of the fluid through the separation column.

In a third aspect, it is an object of the present invention to provide an electrospray ionization setup which allows for a sample fluid can undergo various treatments prior to being ionized.

This object is achieved by the electrospray ionization setup of claim 14.

The electrospray ionization setup comprises:
a temperature regulation device according any one of the preceding claims,
a sample fluid pump for generating a flow of a sample fluid through the temperature regulation device;
a counter electrode, and
a voltage source for applying a voltage between the capillary and the counter electrode.

In a fourth aspect, it is an object of the present invention to provide method for generating an electrospray of a sample fluid which then allows information about the thermal behaviour of the sample fluid to be obtained.

This object is achieved by the electrospray ionization method setup of claim 15.

An electrospray ionization method for generating an electrospray of a sample fluid using the electrospray ionization setup described above is disclosed, the method comprising:
regulating a temperature profile of the sample fluid propagating through the temperature regulation device using the method described above, and
applying a voltage between the capillary and the counter electrode to generate an electrospray of the sample fluid.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a schematic overview of an electrospray ionization setup according to an embodiment of the present invention;
- Fig. 2: shows a perspective view of a temperature regulation device according to an embodiment of the present invention;
- Fig. 3: shows a rear view of the temperature regulation device of Fig. 2;
- Fig. 4: shows a front view of the temperature regulation device of Fig. 2;
- Fig. 5: shows a longitudinal sectional view of the temperature regulation device of Fig. 2;
- Fig. 6: shows a top view of the temperature regulation device of Fig. 2;
- Fig. 7: shows a side view of the temperature regulation device of Fig. 2;
- Fig. 8: shows an enlarged perspective view of a block base and a block cover of the temperature regulation device of Fig. 2 together with a capillary holder in a partially disassembled state;
- Fig. 9: shows an enlarged perspective view of an output holder base or output holder cover of the temperature regulation device of Fig. 2;
- Fig. 10: shows a temperature diagram visualizing a first and second embodiment of a method for regulating a temperature profile of the sample fluid according to the second aspect of the present invention;
- Fig. 11: shows a temperature diagram visualizing a method for regulating a temperature profile of the sample fluid according to a third and fourth embodiment of the present invention;
- Fig. 12: schematically shows a temperature regulation device according to a second embodiment of the present invention;
- Fig. 13: schematically shows a temperature regulation device according to a third embodiment of the present invention;
- Fig. 14: schematically shows a temperature regulation device according to a fourth embodiment of the present invention and a method for regulating a temperature profile of the sample fluid according to a fifth, sixth and seventh embodiment of the present invention, and
- Fig. 15: schematically shows a temperature regulation device according to a fifth embodiment of the present invention and a method for regulating a temperature profile of the sample fluid according to a eighth, nineth and tenth embodiment of the present invention.

### DESCRIPTION OF PREFERRED EMBODIMENTS

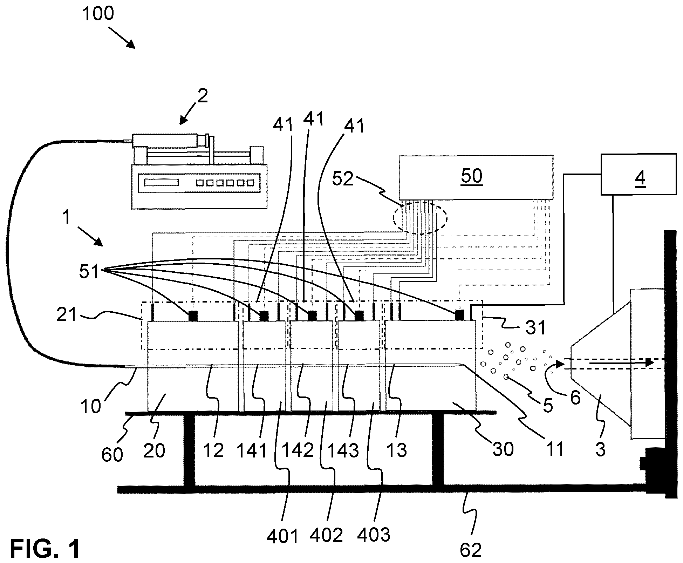

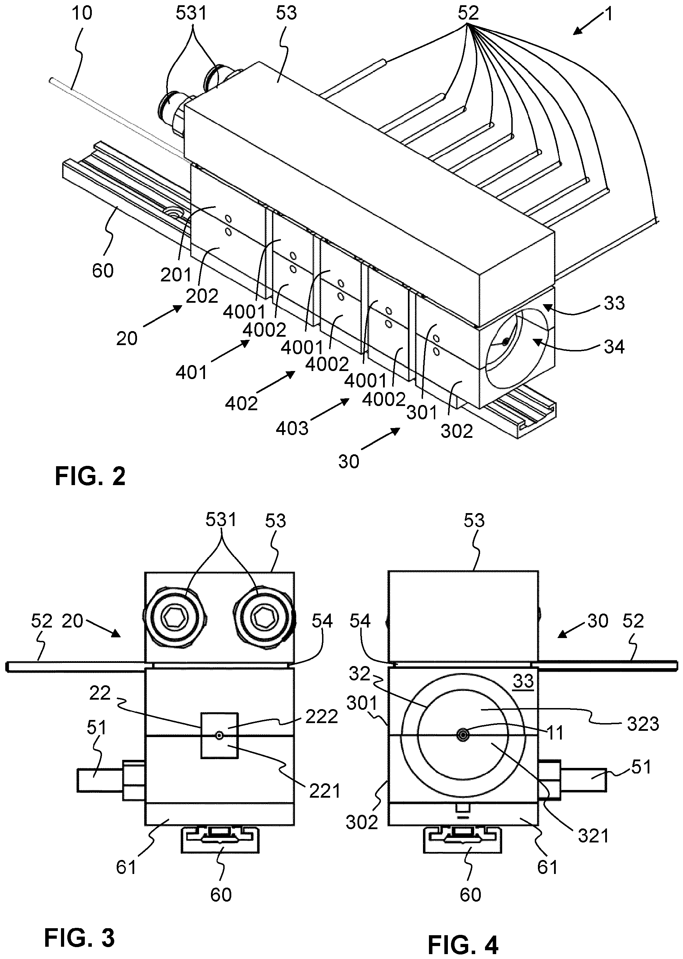

Fig. 1 shows a schematic overview of an electrospray ionization setup 100 comprising a temperature regulation device 1, a sample fluid pump 2, a counter electrode 3 and a voltage source 4. An embodiment of the temperature regulation device 1, which is sketched in a simplified manner in Fig. 1, is shown in more details in Fig. 2-7. The temperature regulation device 1 comprises an input block 20 and an output block 30. In the example shown in Fig. 1, the temperature regulation device 1 comprises a first intermediate block 401, a second intermediate block 402 and a third intermediate block 403 which are arranged between the input block 20 and the output block. The sample fluid pump 2 is used to generate a flow of a sample fluid 5 through the temperature regulation device 1, in particular through a capillary 10, which guides the sample fluid 5 along a flow direction and which defines a flow path for the sample fluid 5. The sample fluid pump 2 is configured such that the sample fluid 5 flows from the input block 20 towards the output block 30. The capillary 10 comprises an input portion 12 and an output portion 13. In the example shown in Fig. 1, the capillary 10 further comprises three intermediate portions 141,142,143. The input portion 12 is received in the input block 20, the output portion 13 is received in the output block 30, the first intermediate portion 141 is received in the first intermediate block 401, the second intermediate portion 142 is received in the second intermediate block 402, and the third intermediate portion 143 is received in the third intermediate block 403. The capillary 10 has a capillary tip 11 defining an end of the flow path in flow direction at which the sample fluid exits the capillary 10.

In order to enable the generation of a liquid jet of droplets of the sample fluid 5, the counter electrode 3 is arranged facing the capillary tip 11, typically at a distance of between 1 mm to 10 mm of the capillary tip 11. When a voltage is applied between the capillary tip 11 and the counter electrode 3, the sample fluid 5 is dispersed into charged fluid droplets, which are then attracted towards the counter electrode 3. The sample fluid 5 may contain particles to be analyzed, in particular biomolecules, which are ionized when the voltage is applied. The sample fluid 5 may further comprise a solvent, which may evaporate on the way towards the counter electrode 3. The counter electrode 3 shown in Fig. 1 comprises an aperture 6, through which at least a portion of the ionized particles, in particular the biomolecules, may enter in order to be directed towards an analyzer device, in particular a mass spectrometer device for further analysis (not explicitly shown in Fig. 1). The voltage may be applied by connecting the temperature regulation device 1 to the voltage source 4. The voltage source 4 may be part of the mass spectrometer device, and the mass spectrometer device may be held at ground. In particular, the voltage may be applied via a high voltage cable that may be screwed onto the temperature regulation device 1.

The input block 20 comprises an input temperature regulation unit 21, the output block 30 comprises an output temperature regulation unit 31, and the first intermediate block 401, the second intermediate block 402 and the third intermediate block 403 each comprise an intermediate temperature regulation unit 41. The temperature regulation units 21,31,41 are shown only schematically in Fig. 1. Each of the temperature regulation units 21,31,41 acts on the respective portion of the capillary 12,13,141,142,143 received in the respective block in order to regulate a temperature of the respective portion of the capillary and thereby regulate the effective temperature profile of the sample fluid 5 along the flow path. The temperature regulation units 21,31,41 are controlled by a control system 50.

In particular, the temperature regulation units 21,31,41 may each comprise at least one Peltier element 54 (not visible in Fig. 1, but visible in Figs. 2-7), wherein the Peltier elements 54 are connected to the control system 50 via lead wires 52 through which an electrical current may flow to operate the Peltier elements 54. In addition, each temperature regulation unit 21,31,41 preferably comprises a temperature sensor 51, which may be connected to the control system 50 to enable a closed feedback loop together with the at least one Peltier 54 element arranged in the respective block. To control the feedback loop and thereby maintain the set temperatures at set values, the control system 50 may contain a feedback module, in particular a proportional-integrative (PI) or proportional-integrative-derivative (PID) module, to create a closed feedback loop.

In a preferred embodiment, the temperature regulation device 1 further comprises a rail 60, wherein the input block 20, the output block 30, the first intermediate block 401, the second intermediate block 402 and the third intermediate block 403 are mounted on the rail 60, preferably so as to be individually movable along the rail 60 and/or removable from the rail 60. In order to keep the capillary 10 aligned with respect to the aperture 6 of the counter electrode 3, the rail 60 and the counter electrode 3 can be mechanically mounted to a common platform 62.

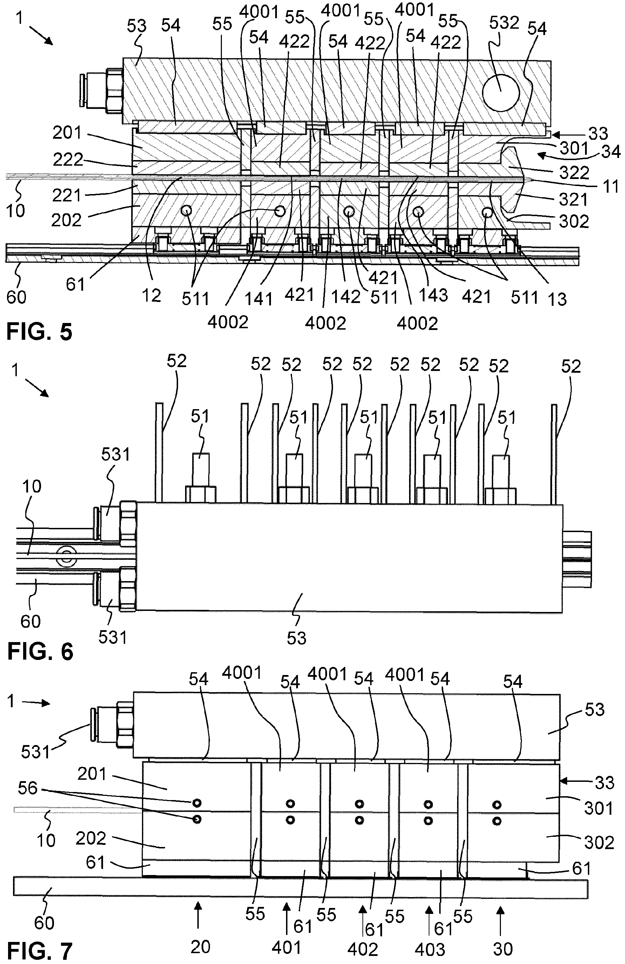

Figs. 2-7 show detailed views of the temperature regulation device 1 according to an embodiment of the present invention. Fig. 2 shows a perspective view of the temperature regulation device 1, Fig. 3 shows a rear view, Fig. 4 shows a front view, Fig. 5 shows a longitudinal sectional view along a vertical section plane that comprises the capillary 10, Fig. 6 shows a top view and Fig. 7 shows a side view of the temperature regulation device 1.

The input block 20, the output block 30 and the three intermediate blocks 401,402,403 each comprise a rail clamp element 61 that is in engagement with the rail 60. In the present embodiment, the rail 60 is straight and runs in parallel to the straight capillary 10. To facilitate individual temperature regulation of each block, the blocks are thermally insulated from each other. For this purpose, insulation elements 55, for instance comprising or consisting of polytetrafluoroethylene (PTFE) and/or polyether ether ketone (PEEK), are arranged between each of the blocks 20,30,401,402,403.

Each of the blocks 20,30,401,402,403 comprises a block cover 201,301,4001 and a block base 202,302,4002 that are connected to each other in a heat conducting manner when assembled, e.g. being screwed to each other, preferably via metal screws, or being clamped to each other via heat conducting clamps (not shown in the figures). The block cover and the block base of each block 20,30,401,402,403 can be disassembled, i.e. separated from each other, to facilitate the insertion of the capillary 10 into the blocks 20,30,401,402,403.

Each of the blocks 20,30,401,402,403 comprises a Peltier element 54 as part of their respective temperature regulation unit, as well as a pair of lead wires 52 connecting the Peltier element 54 to the control system. In the embodiment shown in Figs. 2-7, the temperature regulation device 1 comprises a single heat sink element 53, which is thermally connected to the heat sink sides of the respective Peltier elements 54. The Peltier elements 54 are visible in Figs. 3, 4, 5 and 6, one Peltier element 54 being arranged between each of the block covers 201,301,4001 of the respective blocks 20,30,401,402,403 and the common single heat sink element 53. The heat sink element 53 comprises a cooling conduit 532 through which a fluid coolant, preferably water, may circulate. The cooling conduit 532 can be seen in the sectional views shown in Fig. 5. The heat sink element 53 comprises a pair of input/output fittings 531 for the fluid coolant to enter/exit the heat sink element 53. The heat sink element 53 comprises recesses configured to receive the Peltier elements 54, wherein each recess is manufactured such as to exhibit a flat receiving surface that is in direct contact with the heat sink side of the respective Peltier elements 54, thereby eliminating the need for additional heat transfer layers between the Peltier element 54 and the heat sink element 53. Analogously, the block covers 201,301,4001 may also each comprise in their top surface a recess being manufactured such that it exhibits a flat receiving surface, such that the side of the respective Peltier element 54 that is opposite to the heat sink side is in direct contact with the block cover 201,301,4001. The arrangement of the Peltier elements 54 within these recesses formed by the heat sink element 53 and the respective block covers 201,301,4011,4021,4031 is visible in the sectional view shown in Fig. 5.

In order to measure the temperature within each block 20,30,401,402,403, each block 20,30,401,402,403 comprises a temperature sensor 51. In the embodiment shown in Figs. 2-7, the temperature sensors 51 are inserted into sensor holes 511, which are arranged in each of the block bases 202,302,4002. Since in this embodiment, the Peltier elements 54 are arranged on top of the block covers 201,301,4001 and the capillary 10 is arranged between the block cover 201,301,4001 and the block base 202,302,4002 in each block 20,30,401,402,403, measuring the temperature in the block bases 202,302,4002 takes into account any potentially non-optimal heat transfer at the interface between the block cover 201,301,4001 and the block base 202,302,4002, and thus may provide temperature values that more accurately reflect the actual temperature at the respective portion of the capillary 10 than if the temperature sensors 51 were located in the block cover 201 ,301 ,4001 directly next to the Peltier elements 54.

In the embodiment shown in Figs. 2-7, the three intermediate blocks 401,402,403 have the same length in flow direction, while the input block 20 is longer than the intermediate blocks 401,402,403. The length of each of the blocks 20,30,401,402,403, may however be varied depending on the temperature profile that is desired.

In the embodiment shown in Figs. 2-7, the output block 30 comprises an end face 33 with a recess 34, wherein the capillary tip 11 protrudes into the recess 34 but does not protrude beyond the end face 33 of the output block 30. Compared to a configuration in which the capillary tip 11 would protrude beyond the end face 33 of the output block, such a configuration enables better temperature control of the capillary tip 11, since the Peltier element 54, which extends in parallel to the output capillary 10 beyond the capillary tip 11 as shown in Fig. 5, enables temperature control of the air in the recess 34 and thus the capillary tip 11 protruding into the recess.

Depending on the application and/or the type of sample fluid, capillaries of different diameters may be used. In the embodiment shown in Figs. 2-7, the blocks thus each comprise a removable capillary holder that is suitable for a specific capillary diameter and that may be exchanged for a different capillary holder suitable for a capillary with a different diameter.

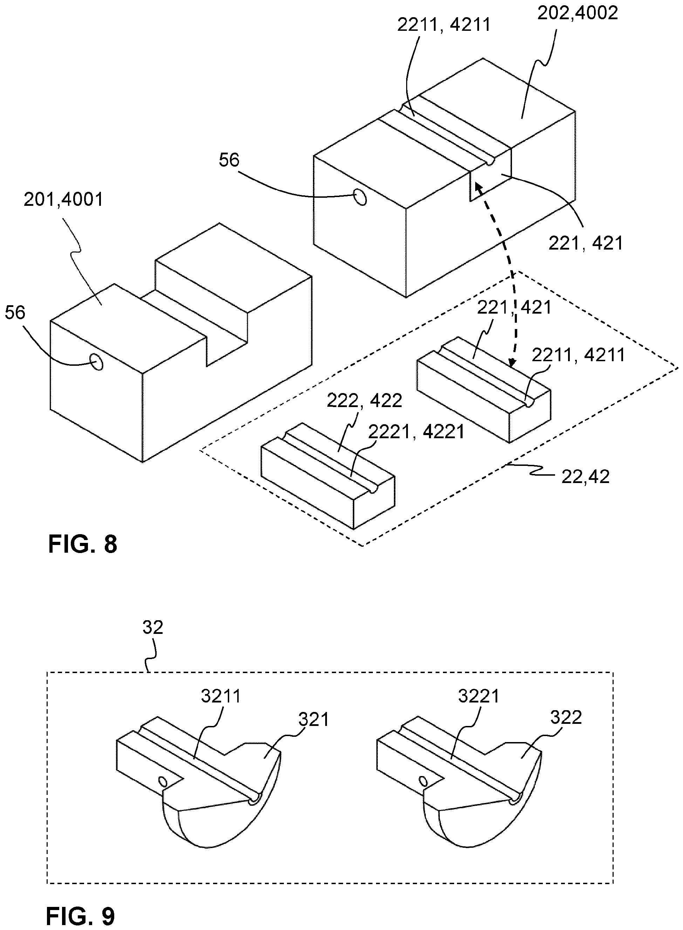

Fig. 8 shows an enlarged perspective view of a block base (e.g. input block base 202 or intermediate block base 4002) and a block cover (e.g. input block cover 201 or intermediate block cover 4001) of the temperature regulation device 1 shown in Fig. 2-7 together with a capillary holder (e.g. an input capillary holder 22 or an intermediate capillary holder 42) in a partially disassembled state. The block base 202, 4002 has a recess configured to receive a holder base 221,421 of the capillary holder (e.g. the input holder base 221 of the input capillary holder 22 or the intermediate holder base 421 of the respective intermediate capillary holder 42). The block cover 201,4001 has a recess configured to receive a holder cover 222,422 of the capillary holder (e.g. the input holder cover 222 of the input capillary holder 22 or the intermediate holder cover 422 of the respective intermediate capillary holder 42). The block cover 201,4001 is flipped upside down and the holder cover 222,422 has been removed from the recess in the block cover in the partially disassembled state shown in Fig. 8. The holder base 221,421 has a base groove 2211,4211 and the holder cover 222,422 has a cover groove 2221,4221, such that, when assembled, the base groove 2211,4211 and the cover groove 2221,4221 form a tunnel in which the respective portion of the capillary is received. The block cover 201,4001 and the block base 202,4002 may each comprise a threaded screw hole 56 into which a screw (not shown) may be screwed to hold the holder cover 222,422 in place when the holder cover 222,422 is inside the block cover 201,4001 and to hold the holder base 221,421 in place when the holder base 221,421 is inside the block base 202,4002.

The input capillary holder 22 and the intermediate capillary holders 42 both have the form of a slab with a rectangular cross section. The output block 30 however comprises an output capillary holder 32 which is shaped differently than the input capillary holder 22 and the intermediate capillary holders 42. Fig. 9 shows an enlarged perspective view of an output holder base 321 or output holder cover 322, the output holder base and output holder cover being identically shaped. The output holder base 321 comprises an output holder base groove 3211 and the output holder cover 322 comprises an output holder cover groove 3221 such that, when assembled, the base groove 3211 and the cover groove 3221 form a tunnel in which the output portion 13 of the capillary is received. When assembled, the output capillary holder 32 comprises a first section in the form of a slab with a rectangular cross section, and a second section which has a circular cross section and forms a cone. The output portion 13 of the capillary 10 is preferably placed inside the output capillary holder 32 such that the capillary tip 11 protrudes beyond the tip of the cone, as shown in the assembled state in Fig. 5.

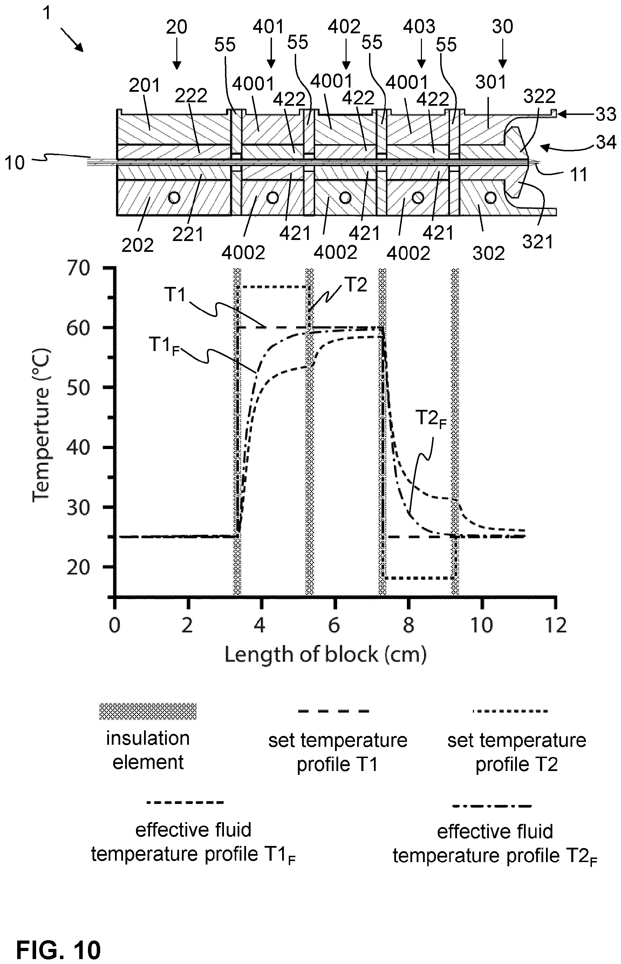

Fig. 10 shows a temperature diagram visualizing a first and second embodiment of a method for regulating a temperature profile of the sample fluid 5 according to the second aspect of the present invention, wherein the sample fluid 5 propagates in a temperature regulation device according to the first aspect of the present invention. The input block 20, the first intermediate block 401, the second intermediate block 402, the third intermediate block 403 and the output block 30 are shown above the temperature diagram to visualize how the different sections of the temperature profile are associated with the different blocks 20,401,402,403,30 of the temperature regulation device 1, wherein other parts of the temperature regulation device 1 are omitted in Fig. 10 for clarity. In the example shown in Fig. 10, the input block 20 has a length in flow direction of 3 cm, the first intermediate block 401, the second intermediate block 402 and the third intermediate block 403 each have a length in flow direction of 1.5 cm, and the output block 30 has a length in flow direction of 3 cm. Insulation elements 55 with a length ranging from 500 µm to 2000 µm in flow direction are arranged between the blocks. The set temperature profiles T1 and T2 correspond to the set temperatures to which the respective temperature regulation units of each block 20,401,402,403,30 are set. The effective fluid temperature profiles T1_{F} and T2_{F} correspond to the effective temperatures of the sample fluid 5 in the respective sections of the capillary 10. The effective fluid temperature profiles T1_{F} and T2_{F} have been obtained using a finite-element simulation method, assuming that the all the block bases 202,302,4002 and block covers 201,301,4001, as well as all the capillary holders (i.e. the holder covers 222, 322,422, and the holder bases 222,321,421) are made of copper. A flow rate of 1.0 m/s was set for the sample fluid. The insulation elements 55 are made polytetrafluoroethylene (PTFE) or of polyether ether ketone (PEEK), and the capillary 10 comprises or consists of borosilicate, aluminosilicate or quartz glass, with or without an inner filament. The capillary may be coated with polyimide or any other type of hydrophobic coating.

### First example - set temperature profile T1

In the first embodiment of the method, which results in the set temperature profile T1 shown in Fig. 10, the input temperature regulation unit of the input block 20 is set to an input set temperature of 25°C. The intermediate temperature regulation unit of the first intermediate block 401 is set to a first intermediate set temperature of 60°C. The intermediate temperature regulation unit of the second intermediate block 402 is set to a second intermediate set temperature of 60°C as well. The intermediate temperature regulation unit of the third intermediate block 403 is set to a third intermediate set temperature of 25°C. The output temperature regulation unit of the output block 30 is set to an output set temperature of 25°C. The set temperature profile T1 thus has a rectangular shape.

The effective fluid temperature profile T1_{F} corresponds to the effective temperature of the sample fluid caused by the set temperature profile T1. As shown in Fig. 10, the effective temperature of the sample fluid increases in a step-like manner between the first intermediate block 401 and the second intermediate block 402, but is still lower than the desired intermediate temperature of 60°C at the end of the second intermediate block 402 in flow direction. Furthermore, the effective temperature of the sample fluid decreases in a step-like manner between the third intermediate block 403 and the output block 30, but is still above the desired output temperature of 25°C at the capillary tip 11.

### Second example - set temperature profile T2

In the second embodiment of the method, which results in the set temperature profile T2 shown in Fig. 10, the input temperature regulation unit of the input block 20 is set to an input set temperature of 25°C. The intermediate temperature regulation unit of the first intermediate block 401 is set to a first intermediate set temperature of 67°C. The intermediate temperature regulation unit of the second intermediate block 402 is set to a second intermediate set temperature of 60°C. The intermediate temperature regulation unit of the third intermediate block 403 is set to a third intermediate set temperature of 18°C. The output temperature regulation unit of the output block 30 is set to an output set temperature of 25°C. The set temperature profile T2 differs from the set temperature profile T1 in that it comprises a temperature overshoot section associated with the first intermediate block 401 and a temperature undershoot section associated with the third intermediate block 403.

The effective fluid temperature profile T2_{F} corresponds to the effective temperature of the sample fluid caused by the set temperature profile T2. As shown in Fig. 10, the effective temperature profile of the sample fluid is smooth, i.e. differentiable in a mathematical sense, between the first intermediate block 401 and the second intermediate block 402, and the desired intermediate temperature of 60°C is reached at the end of the second intermediate block 402 in flow direction. Furthermore, the effective temperature profile of the sample fluid is smooth, i.e. differentiable in a mathematical sense, between the third intermediate block 403 and the output block 30, and the desired output temperature of 25°C is reached at the capillary tip 11.

The overshoot and the undershoot section in the set temperature profile T2 thus have the effect that the effective fluid temperature profile T2_{F} more closely resembles a rectangular profile than without the overshoot and the undershoot section. In some experiments, achieving an effective temperature profile of the sample fluid 5 that is essentially rectangular may be preferred, as it corresponds to an idealized "heat shock" treatment (if the effective intermediate temperature is above the effective input temperature) or "cold shock" treatment (if the effective intermediate temperature is below the effective input temperature) of the sample fluid 5.

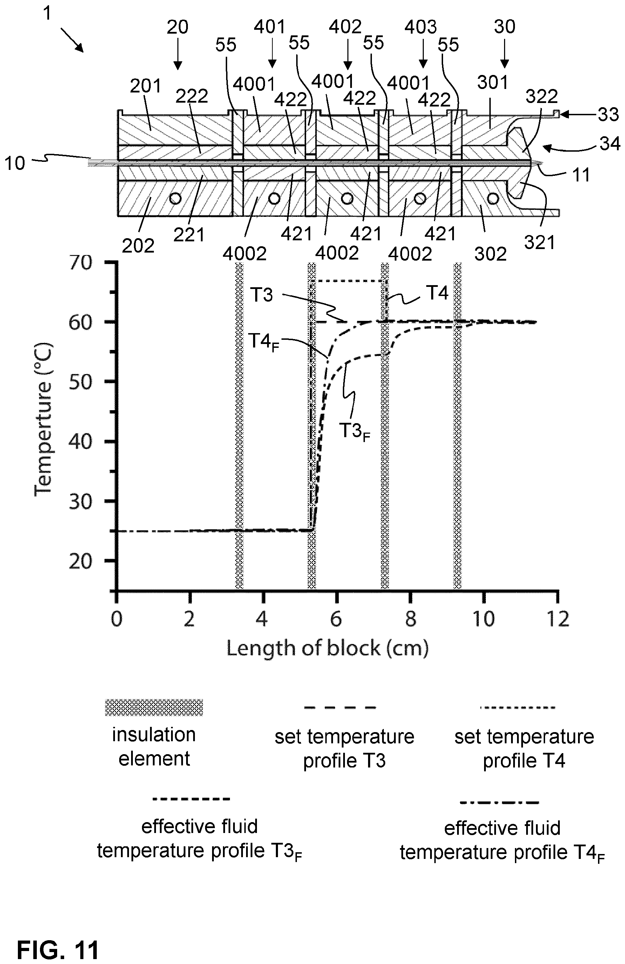

Fig. 11 shows a temperature diagram visualizing a third and fourth embodiment of a method for regulating a temperature profile of the sample fluid 5 according to the second aspect of the present invention, wherein the sample fluid 5 propagates in a temperature regulation device according to the first aspect of the present invention. The input block 20, the first intermediate block 401, the second intermediate block 402, the third intermediate block 402 and the output block 30 are shown above the temperature diagram to visualize how the different sections of the temperature profile are associated with the different blocks 20,401,402,403,30 of the temperature regulation device 1, wherein other parts of the temperature regulation device 1 are omitted in Fig. 10 for clarity. In the example shown in Fig. 11, the temperature regulation device 1 is identical to the one shown in Fig. 10. The set temperature profiles T3 and T4 correspond to the set temperatures to which the respective temperature regulation units of each block 20,401,402,403,30 are set. The effective fluid temperature profiles T3_{F} and T4_{F} correspond to the effective temperatures of the fluid in the respective sections of the capillary 10. The effective fluid temperature profiles T3_{F} and T4_{F} have been obtained using a finite-element simulation method with the same parameters as described for the examples shown in Fig. 10, except that a flow rate of 0.8 m/s was set for the sample fluid.

### Third example - set temperature profile T3

In the third embodiment of the method, which results in the set temperature profile T3 shown in Fig. 11, the input temperature regulation unit of the input block 20 is set to an input set temperature of 25°C. The intermediate temperature regulation unit of the first intermediate block 401 is set to a first intermediate set temperature of 25°C. The intermediate temperature regulation unit of the second intermediate block 402 is set to a second intermediate set temperature of 60°C. The intermediate temperature regulation unit of the third intermediate block 403 is set to a third intermediate set temperature of 60°C. The output temperature regulation unit of the output block 30 is set to an output set temperature of 60°C. The set temperature profile T1 thus has the shape of a step-function.

The effective fluid temperature profile T3_{F} corresponds to the effective temperature of the sample fluid caused by the set temperature profile T3. As shown in Fig. 11, the effective temperature of the sample fluid increases in a step-like manner between the first intermediate block 401 and the second intermediate block 402, and also between the second intermediate block 402 and the third intermediate block 403. The desired output temperature of 60°C is reached at the capillary tip 11, however, the effective temperature of the sample fluid 5 is still below 60°C within the third intermediate block 403.

### Fourth example - set temperature profile T4

In the fourth embodiment of the method, which results in the set temperature profile T4 shown in Fig. 11, the input temperature regulation unit of the input block 20 is set to an input set temperature of 25°C. The intermediate temperature regulation unit of the first intermediate block 401 is set to a first intermediate set temperature of 25°C. The intermediate temperature regulation unit of the second intermediate block 402 is set to a second intermediate set temperature of 67°C. The intermediate temperature regulation unit of the third intermediate block 403 is set to a third intermediate set temperature of 60°C. The output temperature regulation unit of the output block 30 is set to an output set temperature of 60°C.

The effective fluid temperature profile T4_{F} corresponds to the effective temperature of the sample fluid 5 caused by the set temperature profile T4. As shown in Fig. 10, the effective temperature profile of the sample fluid 5 is smooth, i.e. differentiable in a mathematical sense, between the second intermediate block 402 and the third intermediate block 403, and the desired intermediate temperature of 60°C is already reached at the end of the second intermediate block 402 in flow direction.

The set temperature profile T4 differs from the set temperature profile T3 in that it comprises a temperature overshoot section associated with the second intermediate block 402.

The overshoot section in the set temperature profile T4 has the effect that the effective fluid temperature profile T3_{F} more closely resembles a step-function than without the overshoot section. In some experiments, achieving an effective temperature profile of the sample fluid that is essentially a step-function may be preferred, as it corresponds to an idealized "temperature jump" treatment of the sample fluid.

### Further variations of the temperature regulation device

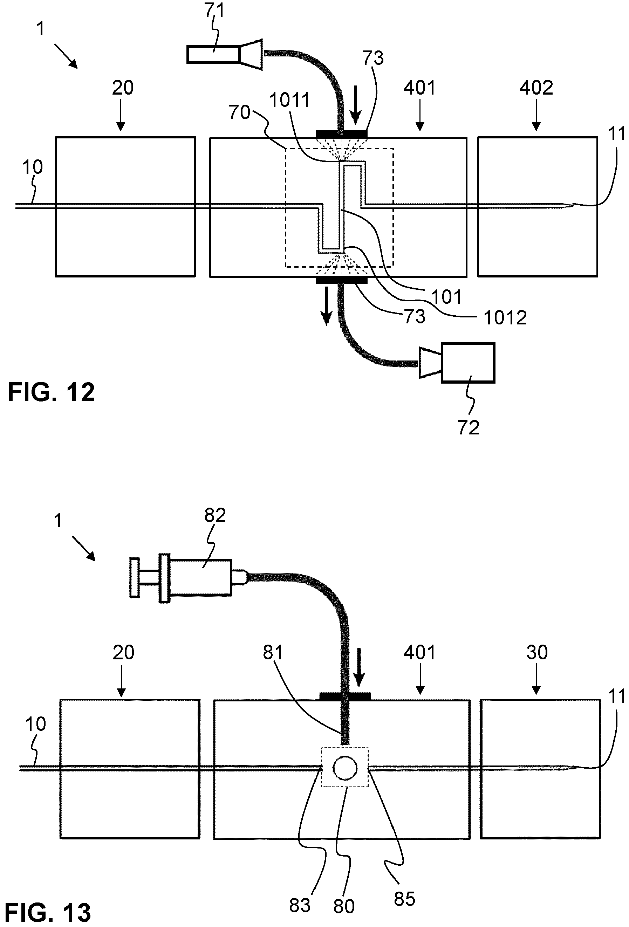

Fig. 12 and Fig. 13 schematically show further variations of the temperature regulation device 1 according to the present invention.

In Fig. 12, the temperature regulation device 1 further comprises an optical interaction unit 70 configured to allow electromagnetic radiation to irradiate the sample fluid. In the example shown in Fig. 12, the optical interaction unit 70 is arranged in an intermediate block 401, however, in other embodiments, the optical interaction unit 70 may also be arranged in the input block 20 or the output block 30. The block in which the optical interaction unit 70 is arranged comprises an optical coupling interface 73, e.g. such as a window or an optical fiber connection to enable the electromagnetic radiation stemming from a light source 71 to enter and/or exit the optical interaction unit 70. The optical interaction unit 70 may further comprise a focussing lens to focus the input and/or output electromagnetic radiation (as schematically shown in Fig. 12) and/or one or more refraction elements and/or one or more diffraction elements and/or one or more mirrors to guide the electromagnetic radiation (not explicitly shown in Fig. 12). In the example shown in Fig. 12, the capillary 10 comprises an optical interaction portion 101 which is part of the optical interaction unit 70. The optical interaction portion 101 of the capillary comprises an input coupling section 1011 at which input electromagnetic radiation is coupled into the capillary 10 to reach the sample fluid 5. The optical interaction portion 101 of the capillary 10 further comprises an output coupling 1012 section at which output electromagnetic radiation can be coupled out of the capillary 10.

After interaction with the sample fluid 5, the electromagnetic radiation may be analyzed by an optical detector 72. As shown in Fig. 12, both the light source 71 and the optical detector 72 can be arranged outside the block of the temperature regulation device. However, to obtain a particularly compact device, it may also be conceivable to integrate the light source 71 and/or the optical detector 72 within the temperature-controlled block comprising the optical interaction unit 70.

In Fig. 13, the temperature regulation device 1 further comprises a mixing unit 80 having a sample inlet 83 for the sample fluid 5 and a separate auxiliary inlet 81 for an auxiliary substance, which can be pumped into the mixing unit 80 using an auxiliary fluid pump 82. The mixing unit 80 is configured to enable mixing of the auxiliary substance with the sample fluid 5. In particular, as schematically shown in Fig. 13, the mixing unit 80 can be a chamber fluidically connected in-line to the capillary 10 via standard fittings (i.e. such that an upstream portion of the capillary 10 is connected to the sample inlet 83 and a downstream portion of the capillary 10 is connected to a sample outlet 84 of the mixing unit 80), the chamber also being fluidically connected to the auxiliary inlet 81. In the example shown in Fig. 12, the mixing unit 80 is arranged in an intermediate block 401, however, in other embodiments, the mixing unit 80 may also be arranged in the input block 20 or the output block 30, and/or there may be more than unit mixing unit 80 in the temperature regulation device 1.

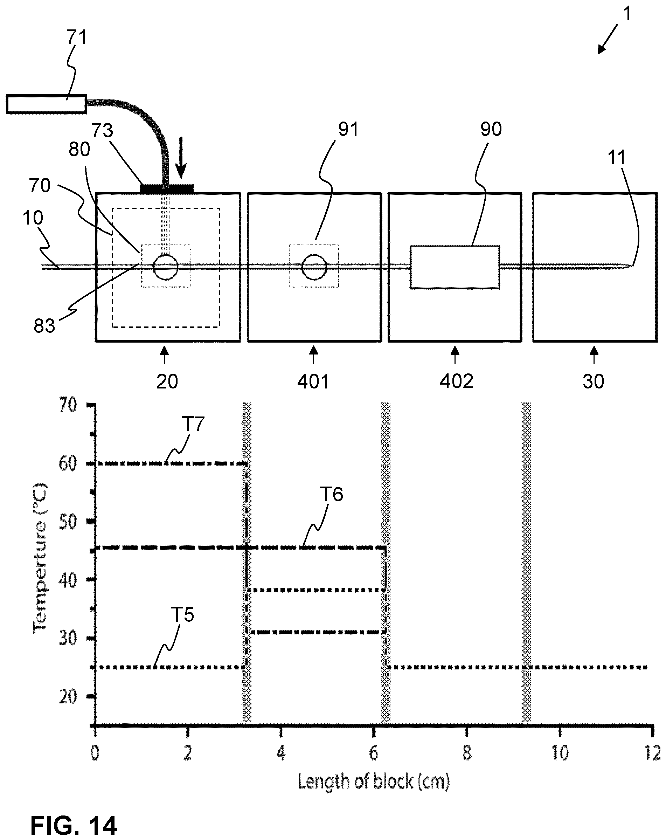

In Fig. 14, the input block 20 comprises an optical interaction unit 70 in which a mixing unit 80 is arranged to enable labelling using an auxiliary substance pumped into the mixing unit 80 using an auxiliary fluid pump (not shown in Fig. 14). The optical interaction unit 70 and/or the mixing unit 80 may be configured as described in Figs. 12 and 13, respectively. Furthermore, the temperature regulation device 1 shown in Fig. 14 comprises an enzymatic reactor 91 being arranged in the first intermediate block 401. The enzymatic reactors 91 may be in-capillary-like reactors that are contain immobilized enzymes suitable for the digestion of components of the sample fluid 5. Standard fittings (not explicitly shown in the figures) can be used to connect the enzymatic reactors 91 to the capillary 10. The temperature regulation device 1 further comprises a separation column 90 for separating components of the sample fluid 5. In this example, the separation column 90 is arranged in the second intermediate block 402, however, it may be arranged in any other block as well. In particular, the separation column 90 can be an in-capillary-like separation column similar to those known in the art for use in nano-liquid chromatography (LC) systems. Standard fittings (not explicitly shown in the figures) can be used to connect the separation column 90 to the capillary 10.

Fig. 14 shows a temperature diagram visualizing a fifth, sixth and seventh embodiment of a method for regulating an effective temperature profile of the sample fluid according to the second aspect of the present invention. In all embodiments shown in Fig. 14, a flow of the sample fluid 5 is established through the capillary 10, and the sample fluid is irradiated with electromagnetic radiation stemming from the light source 71 in the input block 20. After having been irradiated, the sample fluid flows into the enzymatic reactor 91 arranged in the first intermediate block 401, where components of the sample fluid 5 are digested by the enzymes present in the enzymatic reactor 91. The components are then subsequently separated in the separation column 90 that is arranged in the second intermediate block 402 downstream of the enzymatic reactor 91. The sample fluid 5 then reaches the capillary tip 11 in the output block 30, from where it may be sprayed using electrospray ionization as described above, e.g. in the context of Fig. 1.

### Fifth example - set temperature profile T5

In the fifth embodiment of the method, which results in the set temperature profile T5 (dotted line) shown in Fig. 14, the input temperature regulation unit of the input block 20 is set to an input set temperature of 25°C. The intermediate temperature regulation unit of the first intermediate block 401 is set to a first intermediate set temperature of 37°C. The intermediate temperature regulation unit of the second intermediate block 402 is set to a second intermediate set temperature of 25°C. The output temperature regulation unit of the output block 30 is set to an output set temperature of 25°C. In this example, the temperature is set to 37°C for the enzymatic reactor 91, but kept at room temperature (i.e. 25°C) otherwise. Such a temperature profile is particularly advantageous for protein enzymes, since most protein enzymes tend to have the highest enzymatic reaction rate and efficiency at 37°C.

### Sixth example - set temperature profile T6

In the sixth embodiment of the method, which results in the set temperature profile T6 (dashed line) shown in Fig. 14, the input temperature regulation unit of the input block 20 is set to an input set temperature of 45°C. The intermediate temperature regulation unit of the first intermediate block 401 is set to a first intermediate set temperature of 45°C. The intermediate temperature regulation unit of the second intermediate block 402 is set to a second intermediate set temperature of 25°C. The output temperature regulation unit of the output block 30 is set to an output set temperature of 25°C. In this example, both the optical interaction unit 70 and the enzymatic reactor 91 are kept at an elevated temperature (45°C), which allows for studying partially-heat-unfolded proteins in the sample fluid 5 and the effect of irradiation and/or labelling on said proteins.

### Seventh example - set temperature profile T7

In the seventh embodiment of the method, which results in the set temperature profile T7 (dot-dashed line) shown in Fig. 14, the input temperature regulation unit of the input block 20 is set to an input set temperature of 60°C. The intermediate temperature regulation unit of the first intermediate block 401 is set to a first intermediate set temperature of 30°C. The intermediate temperature regulation unit of the second intermediate block 402 is set to a second intermediate set temperature of 25°C. The output temperature regulation unit of the output block 30 is set to an output set temperature of 25°C. In this example, the optical interaction unit 70 is kept at an elevated temperature (60°C), which allows proteins in the sample fluid to fully unfold while being irradiated with electromagnetic radiation. The digestion in the enzymatic reactor 91 then occurs at a lower temperature of 30°C, the separation in the separation column 90 is done at room temperature (25°C), and the sample fluid then exits the temperature regulation device 1 at the capillary tip 11 at room temperature.

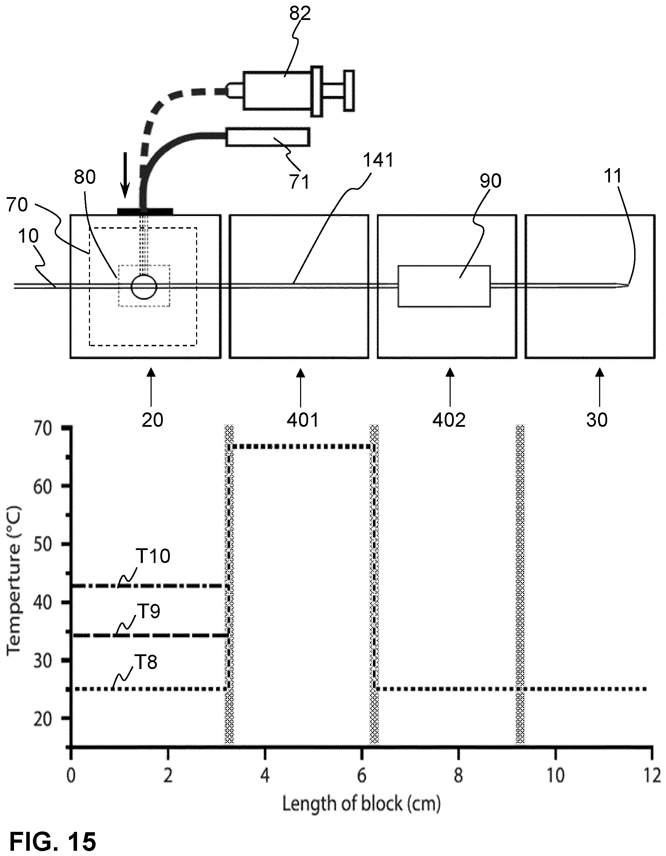

In Fig. 15, the input block 20 comprises an optical interaction unit 70 combined with a mixing unit 80. Furthermore, the temperature regulation device 1 shown in Fig. 15 a separation column 90 for separating components of the sample fluid. In this example, the separation column 90 is arranged in the second intermediate block 402, however, it may be arranged in any other block as well. In particular, the separation column 90 can be an in-capillary-like separation column similar to those known in the art for use in nano-liquid chromatography (LC) systems. Standard fittings (not explicitly shown in the figures) can be used to connect the separation column 90 to the capillary 10.

Fig. 15 shows a temperature diagram visualizing an eighth, nineth and tenth embodiment of a method for regulating a temperature profile of the sample fluid according to the second aspect of the present invention. In all embodiments shown in Fig. 15, a flow of the sample fluid 5 is established through the capillary 10, and the sample fluid is mixed with an auxiliary substance being pumped into the mixing unit 80 by the auxiliary pump 82, while being irradiated with electromagnetic radiation stemming from the light source 71 in the input block 20. After having been irradiated and mixed with the auxiliary substance, the sample fluid 5 flows through the first intermediate block 401 and then reaches the separation column 90 arranged in the second intermediate block 402, where the components of the sample fluid are separated. The sample fluid then reaches the capillary tip 11 in the output block 30, from where it may be sprayed using electrospray ionization as described above, e.g. in the context of Fig. 1.

### Eighth example - set temperature profile T8

In the fifth embodiment of the method, which results in the set temperature profile T8 (dotted line) shown in Fig. 15, the input temperature regulation unit of the input block 20 is set to an input set temperature of 25°C. The intermediate temperature regulation unit of the first intermediate block 401 is set to a first intermediate set temperature of 67°C. The intermediate temperature regulation unit of the second intermediate block 402 is set to a second intermediate set temperature of 25°C. The output temperature regulation unit of the output block 30 is set to an output set temperature of 25°C. In this example, the first intermediate block 401 is kept at the high temperature of 67°C to perform heat-induced fragmentation of the components in the sample fluid 5 as the sample fluid flows through the first intermediate portion of the capillary 141. In order to be able to investigate the influence of the temperature during mixing and irradiation, the input set temperature may be varied, as shown in Fig. 15 with the ninth and tenth example.

### Ninth example - set temperature profile T9

The temperature profile T9 (dashed line) differs from the temperature profile T8 only in that the input temperature regulation unit of the input block 20 is set to an input set temperature of 34°C.

### Tenth example - set temperature profile T10

The temperature profile T10 (dashed line) differs from the temperature profile T8 only in that the input temperature regulation unit of the input block 20 is set to an input set temperature of 43°C.

### Further variations of the method for regulating a temperature profile of a sample fluid

The temperature values shown in Fig. 10, 11, 14 and 15 are to be interpreted as examples only and may of course be adjusted depending on the desired treatment of the sample fluid 5. Furthermore, the number of intermediate blocks may be varied. In particular, a larger number of intermediate blocks may enable an even better fine tuning of the effective temperature of the sample fluid and/or more complex temperature profiles. Alternatively, or additionally, the length of the individual blocks may be varied, in particular, the length of the intermediate block does not necessarily need to be the same for all intermediate blocks. Furthermore, the effective fluid temperature profile may be adjusted by varying the flow rate of the fluid sample.

### LIST OF REFERENCE SIGNS

| | | | |
|---|---|---|---|
| 1 | temperature regulation device | 31 | output temperature regulation unit |
| 2 | sample fluid pump | 32 | output capillary holder |
| 3 | counter electrode | 321 | output holder base |
| 4 | voltage source | 3211 | output holder base groove |
| 5 | sample fluid | 322 | output holder cover |
| 6 | aperture | 3221 | output holder cover groove |
| 10 | capillary | 33 | end face |
| 101 | optical interaction portion | 34 | recess |
| 1011 | input coupling section | 401 | first intermediate block |
| 1012 | output coupling section | 402 | second intermediate block |
| 11 | capillary tip | 403 | third intermediate block |
| 12 | input portion (of the capillary) | 4001 | intermediate block cover |
| 13 | output portion (of the capillary) | 4002 | intermediate block base |
| | | 411 | first intermediate temperature regulation unit |
| 141 | first intermediate portion (of the capillary) | | |
| | | 412 | second intermediate temperature regulation unit |
| 142 | second intermediate portion (of the capillary) | | |
| | | 413 | third intermediate temperature regulation unit |
| 143 | third intermediate portion (of the capillary) | | |
| | | 42 | intermediate capillary holder |
| 20 | input block | 421 | intermediate holder base |
| 201 | input block cover | 4211 | intermediate holder base groove |
| 202 | input block base | | |
| 21 | input temperature regulation unit | 422 | intermediate holder cover |
| | | 4221 | intermediate holder cover groove |
| 22 | input capillary holder | | |
| 221 | input holder base | 50 | control system |
| 2211 | input holder base groove | 51 | temperature sensor |
| 222 | input holder cover | 511 | sensor hole |
| 2221 | input holder cover groove | 52 | lead wires |
| 30 | output block | 53 | heat sink element |
| 301 | output block cover | 531 | input/output fittings |
| 302 | output block base | 532 | cooling conduit |

| | | | |
|---|---|---|---|
| 54 | Peltier element | 73 | optical coupling interface |
| 55 | insulation element | 80 | mixing unit |
| 56 | screw hole | 81 | auxiliary inlet |
| 60 | rail | 82 | auxiliary fluid pump |
| 61 | rail clamp element | 83 | sample inlet |
| 62 | common platform | 84 | sample outlet |
| 70 | optical interaction unit | 90 | separation column |
| 71 | light source | 100 | electrospray ionization setup |
| 72 | optical detector | | |

## Claims

1. A temperature regulation device (1) for regulating an effective temperature profile of a sample fluid (5), preferably a sample fluid (5) destined for electrospray ionization, the temperature regulation device (1) comprising:
a capillary (10) configured for guiding the sample fluid (5) along a flow direction, the capillary (10) defining a flow path for the sample fluid (5);
an input block (20) in which an input portion (12) of the capillary (10) is received, the input block (20) comprising an input temperature regulation unit (21) acting on the input portion (12) of the capillary (10),
an output block (30) in which an output portion (13) of the capillary (10) is received, the output block (30) comprising an output temperature regulation unit (31) acting on an output portion (13) of the capillary (10);
at least one intermediate block (401,402,403) in which at least one intermediate portion (141,142,143) of the capillary (10) is received, the at least one intermediate block (401,402,403) being arranged between the input block (20) and the output block (30) along the flow path, and each intermediate block (401,402,403) comprising an intermediate temperature regulation unit (41) acting on the respective intermediate portion (14) of the capillary (10), and
a control system (50) for controlling the input temperature regulation unit (21), the output temperature regulation unit (31) and the at least one intermediate temperature regulation unit (41),
wherein each of the input temperature regulation unit (21), the output temperature regulation unit (31) and the at least one intermediate temperature regulation unit (41) is configured to individually regulate a temperature of the respective portion of the capillary (10) and thereby regulate the effective temperature profile of the sample fluid (5) along the flow path.

2. The temperature regulation device (1) of claim 1, wherein the output block (30) comprises an end face (33) with a recess (34),
wherein the output portion (13) of the capillary (10) has a capillary tip (11) defining an end of the flow path in flow direction,
wherein the capillary tip (11) protrudes into the recess (34), and
wherein the capillary tip (11) does not protrude beyond the end face (33) of the output block (30).

3. The temperature regulation device (1) of claim 1 or 2, wherein the input block (20) comprises a removable input capillary holder (22) configured to receive the input portion (12) of the capillary, and/or
wherein the at least one intermediate block (401,402,403) each comprises a removable intermediate capillary holder (42) configured to receive the intermediate portion (141,142,143) of the capillary, and/or
wherein the output block (30) comprises a removable output capillary holder (32) configured to receive the output portion (13) of the capillary (10),
wherein preferably, each removable capillary holder comprises a holder base (221, 321, 421) with a base groove (2211, 3211, 4211) and a holder cover (222, 322, 422) with a cover groove (2221, 3221, 4221), such that, when assembled, the base groove (2211, 3211, 4211) and the cover groove (2221, 3221, 4221) form a tunnel in which the respective portion of the capillary (10) is received.

4. The temperature regulation device (1) of any one of the preceding claims, further comprising a rail (60), wherein the input block (20), the output block (30) and the at least one intermediate block (401,402,403) are mounted on the rail (60), preferably so as to be individually removable from the rail (60).

5. The temperature regulation device (1) of any one of the preceding claims, wherein the temperature regulation device (1) comprises:
a first intermediate block (401);
a second intermediate block (402) arranged adjacently to the first intermediate block (401) along the flow path, and
a third intermediate block (403) arranged adjacently to the second intermediate block (402) along the flow path.

6. The temperature regulation device (1) of any one of the preceding claims, wherein the temperature regulation device (1) further comprises:
an optical interaction unit (70) configured to allow electromagnetic radiation to irradiate the sample fluid (5), the optical interaction unit (70) being arranged within the input block (20) or the output block (30) or the at least one intermediate block (401,402,403), and/or
wherein the temperature regulation device (1) further comprises:
a mixing unit (80) having a sample inlet (83) for the sample fluid (5) and an auxiliary inlet (81) for an auxiliary substance, the mixing unit (80) being configured to enable mixing of the auxiliary substance with the sample fluid (5), the mixing unit (80) being arranged within the input block (20) or the output block (30) or the at least one intermediate block (401,402,403), and/or
wherein the temperature regulation device (1) further comprises:
an enzymatic reactor (91) that contains one or more enzymes for digesting components of the sample fluid, the enzymatic reactor (91) being arranged within the input block (20) or the output block (30) or the at least one intermediate block (401,402,403), and/or
wherein the temperature regulation device (1) further comprises:
a separation column (90) for separating components of the sample fluid (5), the separation column (90) being arranged within the input block (20) or the output block (30) or the at least one intermediate block (401,402,403).

7. A method for regulating an effective temperature profile of a sample fluid (5), preferably a sample fluid (5) destined for electrospray ionization, using the temperature regulation device (1) of any one of the preceding claims, the method comprising:
providing a sample fluid (5);
establishing a flow of the sample fluid (5) through the capillary (10);
setting the input temperature regulation unit (21) of the input block (20) to an input set temperature;
setting the intermediate temperature regulation unit (41) of the at least one intermediate block (401,402,403) to an intermediate set temperature;
setting the output temperature regulation unit (31) of the output block (30) to an output set temperature.

8. The method of claim 7,
wherein the intermediate set temperature is higher or lower than the input set temperature, and
wherein the output set temperature is between the intermediate set temperature and the input set temperature.

9. The method of claim 7
wherein the intermediate set temperature is higher or lower than the input set temperature, and
wherein the output set temperature is equal to the input set temperature.

10. The method of claim 9 using the temperature regulation device (1) of claim 5,
wherein the intermediate temperature regulation unit (41) of the first intermediate block (401) is set to a first intermediate set temperature being higher or lower than the input set temperature;
wherein the intermediate temperature regulation unit (41) of the second intermediate block (402) is set to a second intermediate set temperature being between the first intermediate set temperature and the output set temperature, and
wherein the intermediate temperature regulation unit (41) of the third intermediate block (403) is set to a third intermediate set temperature,
wherein the third intermediate set temperature is lower than the output set temperature in case the first intermediate set temperature is higher than the input set temperature, or
wherein the third intermediate set temperature is higher than the output set temperature in case the first intermediate set temperature is lower than the input set temperature.

11. The method of any one of claims 7 to 10,
wherein the temperature regulation device (1) further comprises an optical interaction unit (70) configured to allow electromagnetic radiation to irradiate the sample fluid (5), the optical interaction unit (70) being arranged within the input block (20) or the output block (30) or the at least one intermediate block (401, 402,403),
wherein the method further comprises:
providing electromagnetic radiation;
irradiating the sample fluid (5) in the optical interaction unit (70) with the electromagnetic radiation, and
optionally, detecting the electromagnetic radiation after interaction with the sample fluid (5).

12. The method of any one of claims 7 to 11,
wherein the temperature regulation device (1) further comprises a mixing unit (80) having a sample inlet (83) for the sample fluid (5) and an auxiliary inlet (81) for an auxiliary substance to be mixed with the sample fluid (5), the mixing unit (80) being arranged within the input block (20) or the output block (30) or the at least one intermediate block (401, 402,403), and
wherein the method further comprises:
providing an auxiliary substance, and
mixing the auxiliary substance with the sample fluid (5) in the mixing unit (80), and/or
wherein temperature regulation device (1) further comprises an enzymatic reactor (91) that contains enzymes for digesting components of the sample fluid (5), the enzymatic reactor (91) being arranged within the input block (20) or the output block (30) or the at least one intermediate block (401, 402,403), and
wherein the method further comprises:
inducing a digestion of components of the sample fluid (5) by establishing a flow of the sample fluid (5) through the enzymatic reactor (91).

13. The method of claim anyone of claims 7 to 12,
wherein the temperature regulation device (1) further comprises a separation column (90) for separating components of the sample fluid (5), the separation column (90) being arranged within the input block (20) or the output block (30) or the at least one intermediate block (401, 402,403), and
wherein the method further comprises:
inducing a separation of components of the sample fluid (5) by establishing a flow of the fluid through the separation column (90).

14. An electrospray ionization setup (100) comprising:
a temperature regulation device (1) according any one of the preceding claims,
a sample fluid pump (2) for generating a flow of a sample fluid (5) through the temperature regulation device (1);
a counter electrode (3), and
a voltage source (4) for applying a voltage between the capillary (10) and the counter electrode (3).

15. An electrospray ionization method for generating an electrospray of a sample fluid (5) using the electrospray ionization setup (100) of claim 14, the method comprising:
regulating an effective temperature profile of the sample fluid (5) propagating through the temperature regulation device (1) using the method of any one of claims 7 to 13, and
applying a voltage between the capillary (10) and the counter electrode (3) to generate an electrospray of the sample fluid (5).
